# EUROPÄISCHE PATENTSCHRIFT

(11) **EP 3 029 493 B1**
(45) Veröffentlichungstag und Bekanntmachung des Hinweises auf die Patenterteilung: **16.06.2021**
(21) Anmeldenummer: 14196219.1
(22) Anmeldetag: 04.12.2014
(51) Int. Cl.: G01V 8/12

(54) **Optische Sensorvorrichtung, Anordnung mit selbiger und Verfahren zur Wahrnehmung transparenter Objekte**
Optical sensor device, assembly with the same and method for perception of transparent objects
Dispositif de capteur optique, système en étant équipé et procédé de perception d'objets transparents

(43) Veröffentlichungstag der Anmeldung: 08.06.2016
(73) Patentinhaber: BAUMER ELECTRIC AG, 8500 Frauenfeld (CH)
(72) Erfinder: Preuss, Volker, 78464 Konstanz (DE); Tiedeke, Joachim, 8280 Kreuzlingen (CH)
(74) Vertreter: Strauss, Steffen

(56) Entgegenhaltungen:
- EP-A1- 2 508 920
- EP-A2- 0 802 499
- GB-A- 2 237 107
- JP-A- S5 794 672
- US-A1- 2006 038 198
- US-A1- 2006 145 100
- US-A1- 2013 335 557

## Beschreibung

Die vorliegende Erfindung betriff eine optische Sensorvorrichtung zur Objektwahrnehmung, insbesondere zur Wahrnehmung transparenter Objekte, mit einer Sendeeinheit, die ausgestaltet ist, einen Sendelichtstrahl auszusenden, und mit einer Empfangseinheit, die ausgestaltet ist, einen Empfangslichtstrahl zu empfangen.

Des Weiteren betrifft die Erfindung eine Anordnung zur Objektwahrnehmung, insbesondere eine Lichtschrankenanordnung zur Wahrnehmung transparenter Objekte. Ferner betrifft die Erfindung ein Verfahren zur Objektwahrnehmung, insbesondere zur Wahrnehmung transparenter Objekte, wobei mit einer Sendeeinheit ein Sendelichtstrahl abgeben und mit einer Empfangseinheit ein Empfangslichtstrahl empfangen wird. Optische Sensorvorrichtungen, Anordnungen und Verfahren zur Objektwahrnehmung der vorgenannten Art sind aus dem Stand der Technik bekannt. So werden gemäß Stand der Technik Lichttaster oder Reflexions-Lichtschranken zur Objektwahrnehmung bzw. - erkennung eingesetzt. Transparente Objekte werden beispielsweise durch die Dämpfung eines Lichtstrahls aufgrund fresnelscher Reflexionen an der Objektoberfläche oder durch Störung einer Abbildungsstrecke auf Basis eines Triangulationsverfahrens erkannt.

Die Druckschrift EP 08 024 99 A2 zeigt einen Lumineszenztaster, dessen Sendeeinheit sowohl sichtbares blaues Licht als auch Ultraviolettstrahlung aussendet, welches an der Oberfläche eines Strahlenteilerspiegels auf ein Objekt projiziert wird. Erkannt hierbei werden Objekten mit Materialien, die natürliche oder künstliche Luminophore enthalten. Bevorzugt erfolgt die Erkennung von Objekten, auf denen eine lumineszierende Prüfmarke aufgebracht ist.

Die Druckschrift JP 57 946 72 A zeigt eine Vorrichtung, welche zur Prüfung des Vorhandenseins von Bauteilen auf einer Platine dient. Die Platine wird gesamthaft von einer schräg zur Platine geneigten UV Lichtquelle mit UV Licht beleuchtet. Hinter jedem Bauteil ist ein fluoreszierender Kleber vorgesehen, der unter Beaufschlagung von UV-Licht und fehlendem Bauteil Licht emittiert.

Weiterhin zeigt die Druckschrift EP 25 089 20 A1 eine optische Lichtschranke wobei die Sendeeinheit Ultraviolettstrahlung benutzt.

Die aus dem Stand der Technik bekannten Verfahren zur Objektwahrnehmung haben insbesondere bei transparenten Objekten erhebliche Unsicherheiten. So sind beispielsweise die fresnelschen Reflexionen unter senkrechtem Lichteinfall sehr gering, was zu einem hohen Transmissionsgrad führt. Dadurch kann der nutzbare Signalanteil sehr schwach und daher kleiner sein als etwaige Störeinflüsse, wie z. B. Verschmutzung, Schwankung der Lichtleistung des Sensors bei Temperaturunterschieden oder durch Alterung des Sensors. Dies kann dazu führen, dass die Objektwahrnehmung von derart vielen Grundbedingungen und Einflussfaktoren abhängig ist, dass sie zu unzuverlässig wird. Zwar können die fresnelschen Reflexionen durch eine schräge Ausrichtung des Sensors bzw. der Anordnung zum zu erkennenden Objekt vergrößert werden. Jedoch erhöht sich dadurch der Platzbedarf der Installation auf ungewünschte Weise. Außerdem kann die schräge Ausrichtung zu unklaren Schaltpunkten führen. Darüber hinaus können an Kanten des zu erkennenden Objekts oder insbesondere runden Elementen, wie z. B. Flaschen, Glanzreflexionen auftreten, die zu Fehlauslösungen des Sensors führen können. Gleiche Nachteile gelten insbesondere bei transparenten Objekten für Sensoren und Anordnungen, die mit dem Triangulationsprinzip arbeiten und daher ähnlich unvorhersehbare und somit unsichere Ergebnisse liefern können, wie die mit den fresnelschen Reflexionen arbeitenden Sensoren und Anordnungen.

In Anbetracht der oben genannten Nachteile bei aus dem Stand der Technik bekannten Sensorvorrichtung, Anordnungen und Verfahren liegt der vorliegenden Erfindung die Aufgabe zugrunde, eine sichere Wahrnehmung bzw. Detektion von transparenten Objekten, etwaiger Unregelmäßigkeiten transparenter Objekte und/oder Lücken zwischen transparenten Objekten zu ermöglichen.

Diese Aufgabe wird für eine eingangs genannte Sensorvorrichtung erfindungsgemäß dadurch gelöst, dass der Sendelichtstrahl Ultraviolettstrahlung beinhaltet und dass die Empfangseinheit für Ultraviolettstrahlung im Empfangslichtstrahl unempfindlich ist. Hierbei umfasst die Anordnung eine Sensorvorrichtung und einen Wellenlängenumsetzer, der ausgestaltet ist, den Sendelichtstrahl zumindest teilweise zu absorbieren und aufgrund der Absorption den Empfangslichtstrahl mit einer Wellenlänge größer als Ultraviolettstrahlung abzugeben.

Ferner wird ein Verfahren vorgeschlagen, mit dem die vorstehend genannte Aufgabe erfindungsgemäß dadurch gelöst wird, dass der Sendelichtstrahl überwiegend Ultraviolettstrahlung beinhaltet und der Empfangslichtstrahl im Wesentlichen ultraviolettstrahlungsfrei ist. Das erfindungsgemäße Verfahren kann gemäß einem weiteren möglichen Verfahrensschritt dadurch verbessert werden, dass die Ultraviolettstrahlung im Sendelichtstrahl mit einem Wellenlängenumsetzer in Licht mit größerer Wellenlänge als Ultraviolettstrahlung umgewandelt wird.

Die erfindungsgemäßen Lösungen haben den Vorteil, dass transparente Objekte, insbesondere aus Kunststoffen, ultraviolette Strahlung, auch ultraviolettes Licht bzw. UV-Licht oder Schwarzlicht genannt, sehr stark dämpfen. Dies gilt insbesondere für ultraviolette Strahlung mit Wellenlängen zwischen 350 und 400 nm. Somit werden bei der Verwendung von Ultraviolettstrahlung im Sendelichtstrahl Direktreflexe am wahrzunehmenden Objekt beseitigt. Folglich können durch die hohe energetische Dämpfung der Ultraviolettstrahlung, die höher ist als eine Dämpfung von Licht mit größerer Wellenlänge, beispielsweise im für ein menschliches Auge sichtbaren Bereich, der ca. zwischen 400 und 800 nm liegt, ausreichend voneinander abgrenzbare Schaltpunkte der Sensorvorrichtung definiert werden. Beispielsweise können so insbesondere von Sensorvorrichtung und Wellenlängenumsetzer an einer Transportstrecke gebildete Lichtschrankensysteme ein sicheres Erkennen von entlang der Transportstrecke bewegten Objekten gewährleisten. Bei diesen Objekten kann es sich beispielsweise um transparente Plastikflaschen in der Getränkeindustrie handeln, die zu zählen sind und sich mit mehreren m/s Transportgeschwindigkeit bewegen oder es können entlang der Transportstrecke bewegte Folien auf etwaige Risse überprüft werden. Mit anderen Worten wird erfindungsgemäß der Effekt genutzt, dass solange bzw. sobald die Ultraviolettstrahlung direkt auf den Wellenlängenumsetzer trifft, die Intensität des vom Wellenlängenumsetzer zurückgeworfenen Empfangslichtstrahls sehr viel höher ist, als wenn der Sendelichtstrahl durch ein in der Lichtschrankenanordnung vorhandenes Objekt gedämpft wird und dadurch der Empfangslichtstrahl derart abgeschwächt bzw. nicht mehr vorhanden ist, so dass ein Schaltpunkt in der Sensorvorrichtung vor einem Zustand, in dem ein Objekt wahrgenommen wird, sicher definiert werden kann.

Hinsichtlich der eingangs genannten Sensorvorrichtung kann die erfindungsgemäße Lösung mit den folgenden weiteren, jeweils für sich vorteilhaften Ausführungsformen beliebig ergänzt und weiter verbessert werden.

So kann gemäß einer ersten vorteilhaften Ausführungsform einer erfindungsgemäßen Sensorvorrichtung vorgesehen sein, dass die Sendeeinheit ausgestaltet ist, im Wesentlichen ausschließlich Ultraviolettstrahlung auszusenden. So kann die Sendeeinheit beispielsweise ausschließlich Licht mit einem Wellenspektrum aussenden, das für ein menschliches Auge nicht sichtbar ist, beispielsweise unterhalb 400 nm Wellenlänge. Dies hilft, den Anteil vom Objekt gedämpften bzw. vom Wellenlängenumsetzer umgesetzten Lichts des Sendelichtstrahls zu erhöhen. Dieser Anteil kann soweit erhöht werden, dass jegliches Fremdlicht im Sendelichtstrahl, beispielsweise im für ein menschliches Auge sichtbaren Bereich des Wellenlängenspektrums, außen vor gelassen bzw. in der erfindungsgemäßen Anordnung herausgefiltert werden kann.

Die Sensorvorrichtung kann eine Ultraviolettstrahlungsquelle und/oder eine ultraviolettstrahlungsdurchlässige Sendeoptik umfassen. Somit kann sichergestellt werden, dass der Sendelichtstrahl möglichst ausschließlich Ultraviolettstrahlung beinhaltet. Beispielsweise kann die Ultraviolettstrahlungsquelle eine Lichtquelle sein, die ausschließlich ultraviolettes Licht aussendet. Als eine solche Lichtquelle kann z. B. eine lichtemittierende Diode (LED) eingesetzt werden, die möglichst ausschließlich Licht im UV-Bereich abgibt.

Die Sendeoptik kann eine ultraviolettstrahlungsdurchlässige Sendelinse umfassen. Durch die ultraviolettstrahlungsdurchlässige Sendelinse kann der Sendelichtstrahl den jeweiligen Anforderungen gemäß gebündelt und ausgerichtet werden.

Die Empfangseinheit kann eine Empfangsoptik umfassen, die für Ultraviolettstrahlung im Wesentlichen undurchlässig ist. So kann die Fremd- bzw. Störlichtanfälligkeit der Sensorvorrichtung weiter gemindert werden. Beispielsweise kann die Empfangsoptik weniger als 5% Transmission von Ultraviolettstrahlung unterhalb einer Wellenlänge von 385 nm bei einem Einfallswinkel von 90° zulassen. Die Empfangseinheit kann auf einen Empfangslichtstrahl mit Wellenlängenspektrum zwischen im Wesentlichen 400 und 800 nm reagieren.

Die Empfangsoptik kann eine Empfangslinse umfassen, die für Ultraviolettstrahlung im Wesentlichen undurchlässig ist. Die Empfangslinse kann helfen, den Empfangslichtstrahl so zu bündeln bzw. lenken, dass er den jeweiligen Anforderungen gemäß auf ein Sensorelement bzw. Detektor gerichtet ist. Alternativ oder zusätzlich kann in der Empfangsoptik bzw. einem diese umfassenden Empfangspfad, entlang dem sich der Empfangslichtstrahl außerhalb und/oder innerhalb der Sensorvorrichtung bewegt, ein Sperrelement für Ultraviolettstrahlung wie beispielsweise ein Ultraviolettstrahlungsfilter vorgesehen sein.

Die Sendeeinheit und die Empfangseinheit sind im Wesentlichen in dieselbe Richtung ausgerichtet. Der Sende- und Empfangslichtstrahl können zumindest in einer Ebene des Raumes im Wesentlichen parallel zueinander verlaufen. Dies hilft, die Justierung der Sensorvorrichtung zu vereinfachen.

Die Sensorvorrichtung kann ein Gehäuse umfassen, in das die Sendeeinheit und die Empfangseinheit baulich integriert sind. Zusätzlich kann eine elektrische Schaltung zur Versorgung der Sendeeinheit und Empfangseinheit mit elektrischem Strom sowie zur Steuerung von Sendeeinheit und Empfangseinheit in dem Gehäuse verbaut sein. Somit kann die Sensorvorrichtung möglichst kompakt sowie einfach zu montieren und justieren ausgestaltet sein. Sendeeinheit, Empfangseinheit und Elektronik können in dem Gehäuse gegen schädliche Umwelteinflüsse geschützt aufgenommen sein.

Die Sensorvorrichtung kann eine Frontscheibe umfassen, die sowohl für Ultraviolettstrahlung als auch für Licht mit einer Wellenlänge größer als Ultraviolettstrahlung durchlässig ist. Durch die Verwendung einer einzigen Frontscheibe kann der Aufbau der Sensorvorrichtung vereinfacht sein. Die Frontscheibe kann beispielsweise aus Glas oder Kunststoff mit Transmission im Sende- und Empfangswellenlängenbereich gefertigt sein.

Für die eingangs genannte Anordnung kann die erfindungsgemäße Lösung beispielsweise dadurch beliebig ergänzt und verbessert werden, dass der Empfangslichtstrahl dem roten Farbspektrum zuzuordnen ist. Beispielsweise kann der Empfangslichtstrahl ein Wellenlängenspektrum von im Wesentlichen 500 bis 700 nm, vorzugsweise 575 bis 675 nm, höchst vorzugsweise 600 bis 650 nm aufweisen. Die Zuordnung des Empfangslichtstrahls zum roten Farbspektrum vereinfacht es für einen Installateur oder eine Bedienperson der Anordnung, die ordnungsgemäße Ausrichtung des Sendelichtstrahls auf den Wellenlängenumsetzer zu kontrollieren.

Der Wellenlängenumsetzer kann wenigstens abschnittsweise als Fluorophor ausgestaltet sein. Als Fluorophor kann am Wellenlängenumsetzer bzw. dessen zur Sensorvorrichtung hinweisenden Oberfläche Fluoreszenz auftreten, wenn diese dem Sendelichtstrahl ausgesetzt ist. Der durch den Sendelichtstrahl angeregte Wellenlängenumsetzer kann nach der Absorption des Sendelichtstrahls eine bestimmte Zeit in einem angeregten Zustand bleiben, in dem er den Empfangslichtstrahl aussendet. Diese Zeit ist vorteilhafterweise sehr kurz, beispielsweise im Bereich einiger Nanosekunden auszuwählen, damit mit der erfindungsgemäßen Anordnung entsprechend kurze Schaltzeiten zur Wahrnehmung von Objekten realisierbar sind. Die Fluoreszenz des Wellenlängenumsetzers lässt sich beispielsweise dadurch realisieren, dass der Wellenlängenumsetzer bzw. zumindest dessen zur Sensorvorrichtung hin ausgerichtete Oberfläche Materialien mit Photolumineszenz beinhaltet.

Der Wellenlängenumsetzer kann wenigstens eine lichtemittierende Diode umfassen. So besitzen insbesondere Weißlichtdioden fluoreszierende Abstrahlflächen.

Beispielsweise kann eine solche Diode in Form einer großflächigen Diode vorliegen, die lediglich passiv im Wellenlängenumsetzer verbaut ist, d. h. nicht mit elektrischen Strom versorgt wird, um kostengünstig einen Wellenlängenumsetzer mit den jeweiligen Anforderungen entsprechenden Eigenschaften bereitzustellen.

Der Wellenlängenumsetzer kann eine Vorsatzlinse umfassen, die ausgestaltet ist, den Sendelichtstrahl auf den Wellenlängenumsetzer zu konzentrieren. Somit kann insbesondere bei relativ großen Abständen zwischen Sensorvorrichtung und Wellenlängenumsetzer der Sendelichtstrahl in geeigneter Weise gebündelt auf den Wellenlängenumsetzer gerichtet sein. Insbesondere bei der Verwendung einer erfindungsgemäßen Anordnung als eine Art Reflexions-Lichtschranke können somit Abstände zwischen Sensorvorrichtung und Wellenlängenumsetzer von beispielsweise bis zu mehreren Metern realisiert werden.

Im Folgenden wird die Erfindung anhand vorteilhafter Ausführungsformen mit Bezug auf die beigefügte Zeichnung beispielhaft näher erläutert. Die beschriebenen Ausführungsformen stellen dabei lediglich mögliche Ausgestaltungen dar, bei denen jedoch die einzelnen Merkmale, wie oben beschrieben ist, unabhängig voneinander realisiert und weggelassen werden können. In den Erläuterungen werden gleiche Elemente der Erfindung durchgehend mit gleichen Bezugszeichen benannt, um unnötig wiederholte Beschreibungen zu vermeiden.

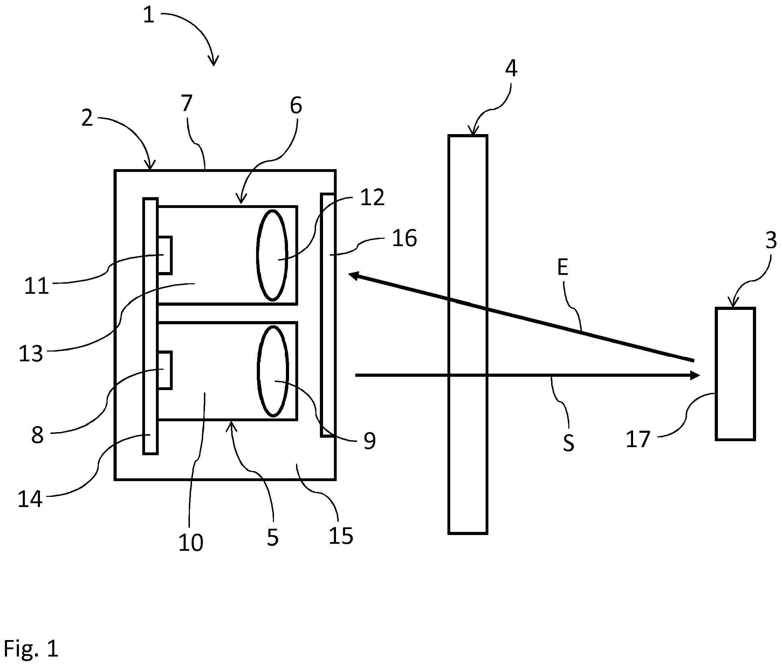

- Fig. 1: zeigt als einzige Figur eine Ausführungsform einer erfindungsgemäßen Anordnung umfassend eine erfindungsgemäße Sensorvorrichtung und einen Wellenlängenumsetzer.

Fig. 1 zeigt eine erfindungsgemäße Anordnung 1 zur Objektwahrnehmung in einer schematischen Seitenansicht. Die Anordnung 1 umfasst eine erfindungsgemäße Sensorvorrichtung 2 und einen erfindungsgemäßen eingesetzten Wellenlängenumsetzer 3. Zwischen Sensorvorrichtung 2 und Wellenlängenumsetzer 3 ist ein Objekt 4 angeordnet, das beispielsweise transparent ist. Die Sensorvorrichtung 2 besitzt eine Sendeeinheit 5 und eine Empfangseinheit 6, die beide gemeinsam in einem Gehäuse 7 der Sensorvorrichtung 2 untergebracht sein können. Die Sendeeinheit 5 kann eine Lichtquelle 8 und eine Sendelinse 9 besitzen, die beide zusammen Teil einer Sendeoptik 10 sein können, mit deren Hilfe ein Sendelichtstrahl S erzeugbar ist, der Ultraviolettstrahlung beinhaltet. Die Empfangseinheit 6 kann ein Sensorelement 11 und eine Empfangslinse 12 umfassen, die Teil einer Empfangsoptik 13 der Sensorvorrichtung 1 sein können, die dazu ausgestaltet ist, einen vom Wellenlängenumsetzer 3 ausgehenden Empfangslichtstrahl E aufzunehmen bzw. zu detektieren.

Sendeeinheit 5 und Empfangseinheit 6 können beide an eine elektrische Schaltung 14 verbunden sein, die es erlaubt, die Sendeeinheit 5 und die Empfangseinheit 6, insbesondere deren Lichtquelle 8 und Sensorelement 11 mit elektrischem Strom zu versorgen sowie vom Sensorelement 11 ausgehende Sensorsignale auszuwerten. Von der elektrischen Schaltung 14 können elektrische und/oder optische Versorgungs- sowie Signalanschlüsse beliebig an Ausgänge des Gehäuses 7 und/oder nach außerhalb des Gehäuses 7 geführt werden, um die Sensorvorrichtung 1 mit elektrischem Strom zu versorgen sowie Sensorsignale auszuwerten. Alternativ oder zusätzlich ist es natürlich auch möglich, die Sensorvorrichtung 2 im Batteriebetrieb zu betreiben und sämtliche Signale kabellos der Einrichtung zuzuführen sowie von dieser zu empfangen bzw. aus dieser auszulesen. Um einen Innenraum 15 der Sensorvorrichtung 2 zu verschließen, kann die Sensorvorrichtung 2 mit einer Frontscheibe 16 versehen sein.

Im Betrieb der Anordnung 1 wird mit Hilfe der Lichtquelle 8 Ultraviolettstrahlung beinhaltendes Licht erzeugt, das durch die Sendelinse gebündelt werden kann und als der Sendelichtstrahl S durch die Frontscheibe 16 aus der Sensorvorrichtung 2 austritt. Sobald der Sendelichtstrahl S ungehindert auf den Wellenlängenumsetzer 3 trifft, absorbiert dessen Oberfläche 17 den Sendelichtstrahl S und emittiert daraufhin den Empfangslichtstrahl E in Form gegenüber dem Sendelichtstrahl S energieärmeren Lichts, das einen geringeren, bevorzugt keinen Anteil ultravioletten Lichts enthält als der Sendelichtstrahl S. Beispielsweise kann der Sendelichtstrahl S so gut wie ausschließlich aus ultraviolettem Licht bestehen, wohingegen der Empfangslichtstrahl E im Spektrum des sichtbaren Lichts, beispielsweise im Wesentlichen zwischen 400 nm und 800 nm Wellenlänge anzusiedeln sein kann. Solange sich das Objekt 4 nicht zwischen Sensorvorrichtung 2 und Wellenlängenumsetzer 3 befindet, gelangt der Empfangslichtstrahl E entsprechend der Intensität des auf den Wellenlängenumsetzer 3 treffenden Sendelichtstrahls S durch die Frontscheibe 16 zur Empfangseinheit 6, wo er durch deren Empfangslinse 12 gebündelt, möglicherweise gefiltert, und auf das Sensorelement 11 geworfen werden kann. Entsprechend der Wahrnehmung des Empfangslichtstrahls E durch das Sensorelement 11 kann dieses ein Signal erzeugen, was den jeweiligen Anforderungen gemäß durch die elektrische Schaltung 14 ausgewertet und in beliebiger analoger und/oder digitaler Form ausgegeben werden kann.

Sobald sich das Objekt 4 zwischen der Sensorvorrichtung 2 und dem Wellenlängenumsetzer 3 befindet, kann das Objekt 4, insbesondere wenn es sich um ein transparentes Objekt vorwiegend aus Kunststoff handelt, beispielsweise eine Flasche, Scheibe, Folie, oder Ähnliches, den Anteil an ultravioletter Strahlung im Sendelichtstrahl S soweit dämpfen bzw. absorbieren, dass der Empfangslichtstrahl E stark abgeschwächt ist. Entsprechend gelangt kein Empfangslichtstrahl E bzw. ein Empfangslichtstrahl E mit derart geringer Intensität zum Sensorelement 11, dass das von diesem ausgegebene Signal sicher derart interpretiert werden kann, dass sich das Objekt 4 zwischen der Sensorvorrichtung 2 und dem Wellenlängenumsetzer 3 befindet.

Im Rahmen des Erfindungsgedankens sind Abweichung von den oben beschriebenen Ausführungsformen einer erfindungsgemäßen Anordnung 1 möglich. So kann die Anordnung 1 Sensorvorrichtungen 2 und Wellenlängenumsetzer 3 in beliebiger Zahl und Ausgestaltungsform beinhalten, um Objekte 4 beliebiger Art den jeweiligen Anforderungen gemäß wahrnehmen zu können. Die Sendeeinheit 5 kann den jeweiligen Anforderungen gemäß Lichtquellen 8 und Sendelinsen 9 umfassen, die Sendeoptiken 10 bilden können. Die Empfangseinheit 6 kann den jeweiligen Anforderungen gemäß Sensorelement 11, beispielsweise Dioden und/oder Arrays und Empfangslinsen 12 beinhalten, um Empfangsoptiken 13 zu bilden. Die Sendeeinheit 5 und die Empfangseinheit 6 können den jeweiligen Anforderungen gemäß mit elektrischen Schaltungen 14 verbunden sein, die den jeweiligen Anforderungen gemäß ausgestaltet sein können, um eine Objektwahrnehmung zu ermöglichen. Um die Sendeeinheit 5, die Empfangseinheit 6 und die elektrische Schaltung 14 zu schützen, können diese den jeweiligen Anforderungen gemäß in einem Innenraum 15 eines Gehäuses 7 beispielsweise hinter einer Frontscheibe 16 geschützt angeordnet sein. Der Wellenlängenumsetzer 3 kann den jeweiligen Anforderungen gemäß ausgestaltet und mit einer Oberfläche 17 versehen sein, um den Sendelichtstrahl S den jeweiligen Anforderungen gemäß in den Empfangslichtstrahl E umzusetzen.

Wie es auch sei, es ist anzumerken und zu verstehen, dass es Verbesserungen und Modifikationen geben kann, die an der oben ausführlich beschriebenen vorliegenden Erfindung vorgenommen werden können, ohne vom Umfang der Erfindung abzuweichen, wie er in den beigefügten Ansprüchen dargelegt ist.

## Patentansprüche

1. Anordnung an einer Transportstrecke, die Anordnung beinhaltend eine optische Sensorvorrichtung (2) und einen Wellenlängenumsetzer (3) zur Wahrnehmung eines entlang der Transportstrecke zwischen der optischen Sensorvorrichtung (2) und dem Wellenlängenumsetzer (3) bewegten Objekts (4), wobei die optische Sensorvorrichtung (2) eine Sendeeinheit (5) und eine Empfangseinheit (6) umfasst, wobei die Sendeeinheit (5) ausgestaltet ist, einen Sendelichtstrahl (S) auszusenden und der Sendelichtstrahl (S) Ultraviolettstrahlung beinhaltet und die Empfangseinheit (6) ausgestaltet ist, einen Empfangslichtstrahl (E) zu empfangen und für Ultraviolettstrahlung im Empfangslichtstrahl (E) unempfindlich ist und der Wellenlängenumsetzer (3) ausgestaltet ist, den Sendelichtstrahl (S) zumindest teilweise zu absorbieren und aufgrund der Absorption den Empfangslichtstrahl (E) mit einer Wellenlänge größer als Ultraviolettstrahlung abzugeben, wobei die Sendeeinheit (5) und die Empfangseinheit (6) im Wesentlichen in dieselbe Richtung ausgerichtet sind.

2. Anordnung (1) nach Anspruch 1, **dadurch gekennzeichnet, dass** das Objekt (4) transparent für einen Sendelichtstrahl (S) mit einer Wellenlänge grösser als Ultraviolettstrahlung ist.

3. Anordnung (1) nach einem der vorhergehenden Ansprüche, **dadurch gekennzeichnet, dass** die Sendeeinheit (5) ausgestaltet ist, im Wesentlichen ausschließlich Ultraviolettstrahlung auszusenden.

4. Anordnung (1) nach einem der vorhergehenden Ansprüche, **gekennzeichnet durch** eine Ultraviolettstrahlungsquelle und / oder eine ultraviolettstrahlungsdurchlässige Sendeoptik (10), wobei die Sendeoptik (10) vorzugsweise eine ultraviolettstrahlungsdurchlässige Sendelinse (9) umfasst.

5. Anordnung (1) nach einem der vorhergehenden Ansprüche, **dadurch gekennzeichnet, dass** die Empfangseinheit (6) eine Empfangsoptik (13) umfasst, die für Ultraviolettstrahlung im Wesentlichen undurchlässig ist.

6. Anordnung (1) nach Anspruch 5, **dadurch gekennzeichnet, dass** die Empfangsoptik (13) eine Empfangslinse (12) umfasst, die für Ultraviolettstrahlung im Wesentlichen undurchlässig ist.

7. Anordnung (1) nach einem der vorhergehenden Ansprüche, **dadurch gekennzeichnet, dass** der Sendelichtstrahl (S) und der Empfangslichtstrahl (E) zumindest in einer Ebene des Raumes im Wesentlichen parallel zueinander verlaufen.

8. Anordnung (1) nach einem der vorhergehenden Ansprüche, **gekennzeichnet durch** ein Gehäuse (7), in das die Sendeeinheit (5) und die Empfangseinheit (6) baulich integriert sind.

9. Anordnung (1) nach einem der vorhergehenden Ansprüche, **gekennzeichnet durch** eine Frontscheibe (16), die sowohl für Ultraviolettstrahlung als auch für Licht mit einer Wellenlänge größer als Ultraviolettstrahlung durchlässig ist.

10. Anordnung (1) nach einem der vorhergehenden Ansprüche, **dadurch gekennzeichnet, dass** der Empfangslichtstrahl (E) dem roten Farbspektrum zuzuordnen ist.

11. Anordnung (1) nach einem der vorhergehenden Ansprüche, **dadurch gekennzeichnet, dass** der Wellenlängenumsetzer (3) wenigstens abschnittswiese als Fluorophor ausgestaltet ist.

12. Anordnung (1) nach einem der vorhergehenden Ansprüche, **dadurch gekennzeichnet, dass** der Wellenlängenumsetzer (3) wenigstens eine lichtemittierende Diode umfasst.

13. Anordnung (1) nach einem der vorhergehenden Ansprüche, **dadurch gekennzeichnet, dass** der Wellenlängenumsetzer (3) eine Vorsatzlinse umfasst, die ausgestaltet ist, den Sendelichtstrahl (S) auf den Wellenlängenumsetzer (3) zu konzentrieren.

14. Verfahren zur Wahrnehmung eines Objekts (4), wobei das Objekt (4) entlang einer Transportstrecke zwischen einer optischen Sensorvorrichtung (2) und einem Wellenlängenumsetzer (3) bewegt wird, wobei mit einer Sendeeinheit (5) der optischen Sensorvorrichtung (2) ein Sendelichtstrahl (S) abgegeben und mit einer Empfangseinheit (6) der optischen Sensorvorrichtung (2) ein Empfangslichtstrahl (E) empfangen wird, wobei die Sendeeinheit (5) und die Empfangseinheit (6) im Wesentlichen in dieselbe Richtung ausgerichtet sind und der Sendelichtstrahl (S) überwiegend Ultraviolettstrahlung beinhaltet, wobei mit dem Wellenlängenumsetzer (3) der Sendelichtstrahl (S) zumindest teilweise absorbiert wird und aufgrund der Absorption der Empfangslichtstrahl (E) mit einer Wellenlänge größer als Ultraviolettstrahlung von dem Wellenlängenumsetzer (3) emittiert wird, so dass der Empfangslichtstrahl (E) im Wesentlichen ultraviolettstrahlungsfrei ist.

## Claims

1. Arrangement on a transport line, the arrangement comprising an optical sensor device (2) and a wavelength converter (3) for the perception of an object (4) moved along the transport line between the optical sensor device (2) and the wavelength converter (3), the optical sensor device (2) comprising an emitting unit (5) and a receiving unit (6), wherein the emitting unit (5) is designed to emit an emitting light beam (S) and the emitting light beam (S) comprising ultraviolet radiation, and the receiving unit (6) is designed to receive a receiving light beam (E) and is insensitive to ultraviolet radiation in the receiving light beam (E), and the wavelength converter (3) is designed to absorb the emitting light beam (S) partly at least and, due to the absorption, to give off the receiving light beam (E) with a wavelength greater than ultraviolet radiation wherein the emitting unit (5) and the receiving unit (6) are essentially oriented in the same direction.

2. Arrangement (1) according to claim 1, **characterized in that** the object (4) is transparent for an emitting light beam (S) with a wavelength greater than ultraviolet radiation.

3. Arrangement (1) according to one of the preceding claims, **characterized in that** the emitting unit (5) is designed to essentially emit ultraviolet radiation exclusively.

4. Arrangement (1) according to one of the preceding claims, **characterized by** an ultraviolet radiation source and / or transmission optics penetrable to ultraviolet radiation (10), wherein the transmission optics (10) preferably comprise an emission lens (9) penetrable to ultraviolet radiation.

5. Arrangement (1) according to one of the preceding claims, **characterized in that** the receiving unit (6) comprises receiving optics (13) essentially impenetrable to ultraviolet radiation.

6. Arrangement (1) according to claim 5, **characterized in that** the receiving optics (13) comprise a receiving lens (12) which is essentially impenetrable to ultraviolet radiation.

7. Arrangement (1) according to one of the preceding claims, **characterized in that** the emitting light beam (S) and the receiving light beam (E) run parallel to each other at least in one spatial plane.

8. Arrangement (1) according to one of the preceding claims, **characterized by** a housing (7) in which the emitting unit (5) and the receiving unit (6) are structurally integrated.

9. Arrangement (1) according to one of the preceding claims, **characterized by** a front pane (16) which is penetrable not only to ultraviolet radiation but also to light with a wavelength greater than ultraviolet radiation.

10. Arrangement (1) according to one of the preceding claims, **characterized in that** the receiving light beam (E) is to be allocated to the red color spectrum.

11. Arrangement (1) according to one of the preceding claims, **characterized in that** the wavelength converter (3) is designed at least in sections as a fluorophore.

12. Arrangement (1) according to one of the preceding claims, **characterized in that** the wavelength converter (3) comprises at least one light-emitting diode.

13. Arrangement (1) according to one of the preceding claims, **characterized in that** the wavelength converter (3) comprises a front lens designed to focus the emitting light beam (S) on the wavelength converter (3).

14. Method for the perception of an object (4), wherein the object (4) is moved along a transport line between an optical sensor device (2) and a wavelength converter (3), wherein an emitting unit (5) of the optical sensor device (2) gives off an emitting light beam (S) and, with a receiving unit (6) of the optical sensor device (2), a receiving light beam (E) is received, the emitting unit (5) and the receiving unit (6) being essentially oriented in the same direction, and the emitting light beam (S) predominantly comprises ultraviolet radiation, wherein the emitting light beam (S) is at least partly absorbed by the wavelength converter (3) and, due to the absorption, the receiving light beam (E) is emitted by the wavelength converter (3) with a wavelength greater than the ultraviolet radiation so that the receiving light beam (E) is essentially free from ultraviolet radiation.

## Revendications

1. Agencement sur une voie de transport, l'agencement comportant un dispositif de détection optique (2) et un convertisseur de longueur d'onde (3) pour la perception d'un objet (4) déplacé le long d'une voie de transport entre le dispositif de détection optique (2) et le convertisseur de longueur d'onde (3), le dispositif de détection optique (2) comprenant une unité d'émission (5) et une unité de réception (6), l'unité d'émission (5) étant conçue pour émettre un faisceau lumineux émis (S) et le faisceau lumineux émis (S) comprenant un rayonnement ultraviolet et l'unité de réception (6) étant conçue pour recevoir un faisceau lumineux reçu (E) et étant insensible au rayonnement ultraviolet dans le faisceau lumineux reçu (E) et le convertisseur de longueur d'onde (3) étant conçu pour absorber au moins une partie du faisceau lumineux émis (S) et, en raison de l'absorption, pour émettre le faisceau lumineux reçu (E) avec une longueur d'onde supérieure au rayonnement ultraviolet, l'unité d'émission (5) et l'unité de réception (6) étant dirigées essentiellement dans la même direction.

2. Agencement (1) selon la revendication 1, **caractérisé en ce que** l'objet (4) est transparent à un faisceau lumineux émis (S) présentant une longueur d'onde supérieure au rayonnement ultraviolet.

3. Agencement (1) selon l'une des revendications précédentes, **caractérisé en ce que** l'unité d'émission (5) est conçue pour émettre essentiellement exclusivement un rayonnement ultraviolet.

4. Agencement (1) selon l'une des revendications précédentes, **caractérisé par** une source de rayonnement ultraviolet et/ou une optique d'émission (10) transparente au rayonnement ultraviolet, l'optique d'émission (10) comprenant de préférence une lentille d'émission (9) transparente au rayonnement ultraviolet.

5. Agencement (1) selon l'une des revendications précédentes, **caractérisé en ce que** l'unité de réception (6) comprend une optique de réception (13) qui est essentiellement opaque au rayonnement ultraviolet.

6. Agencement (1) selon la revendication 5, **caractérisé en ce que** l'unité de réception (13) comprend une lentille de réception (12) qui est essentiellement opaque au rayonnement ultraviolet.

7. Agencement (1) selon l'une des revendications précédentes, **caractérisé en ce que** le faisceau lumineux émis (S) et le faisceau lumineux reçu (E) s'étendent parallèlement l'un à l'autre au moins dans un plan de la pièce.

8. Agencement (1) selon l'une des revendications précédentes, **caractérisé par** un boîtier (7), dans lequel sont intégrées structurellement l'unité d'émission (5) et l'unité de réception (6).

9. Agencement (1) selon l'une des revendications précédentes, **caractérisé par** une face avant (16), qui est transparente tant au rayonnement ultraviolet qu'à une lumière présentant une longueur d'onde supérieure au rayonnement ultraviolet.

10. Agencement (1) selon l'une des revendications précédentes, **caractérisé en ce que** le faisceau lumineux reçu (E) doit être attribué au spectre lumineux rouge.

11. Agencement (1) selon l'une des revendications précédentes, **caractérisé en ce que** le convertisseur de longueur d'onde (3) est conçu, au moins pour certaines sections, sous la forme de fluorophore.

12. Agencement (1) selon l'une des revendications précédentes, **caractérisé en ce que** le convertisseur de longueur d'onde (3) comprend au moins une diode électroluminescente.

13. Agencement (1) selon l'une des revendications précédentes, **caractérisé en ce que** le convertisseur de longueur d'onde (3) comprend une lentille additionnelle qui est conçue pour concentrer le faisceau lumineux émis (S) sur le convertisseur de longueur d'onde (3).

14. Procédé permettant de percevoir un objet (4), l'objet (4) étant déplacé le long d'une voie de transport entre un dispositif de détection optique (2) et un convertisseur de longueur d'onde (3), un faisceau lumineux émis (S) étant émis à l'aide d'une unité d'émission (5) du dispositif de détection optique (2) et un faisceau lumineux reçu (E) étant reçu à l'aide d'une unité de réception (6) du dispositif de détection optique (2), l'unité d'émission (5) et l'unité de réception (6) étant dirigées essentiellement dans la même direction et le faisceau lumineux émis (S) comprenant principalement un rayonnement ultraviolet, le faisceau lumineux émis (S) étant absorbé au moins en partie par le convertisseur de longueur d'onde (3) et, en raison de l'absorption, le faisceau lumineux reçu (E) étant émis avec une longueur d'onde supérieure au rayonnement ultraviolet par le convertisseur de longueur d'onde (3) de sorte que le faisceau lumineux reçu (E) est essentiellement dépourvu de rayonnement ultraviolet.
